# EUROPÄISCHE PATENTSCHRIFT

(11) **EP 3 371 064 B1**
(45) Veröffentlichungstag und Bekanntmachung des Hinweises auf die Patenterteilung: **20.05.2020**
(21) Anmeldenummer: 16745428.9
(22) Anmeldetag: 20.07.2016
(51) Int. Cl.: B65C 9/36

(54) **STEMPELFUSS FÜR EINEN ETIKETTENSTEMPEL UND VORRICHTUNG UND VERFAHREN ZUM ETIKETTIEREN**
LABEL APPLICATOR PLATEN AND DEVICE AND METHOD FOR LABELLING
PLATEAU D'UN APPLICATEUR D'ETIQUETTES ET DISPOSITIF ET PROCEDE D'ETIQUETTAGE

(30) Priorität: 06.11.2015 DE 102015119139
(43) Veröffentlichungstag der Anmeldung: 12.09.2018
(73) Patentinhaber: Espera-Werke GmbH, 47058 Duisburg (DE)
(72) Erfinder: KORTHÄUER, Marcus, 45481 Mülheim an der Ruhr (DE); VICKTORIUS, Winfried, 47249 Duisburg (DE); WOLFF, Peter, 53913 Swisttal-Heimerzheim (DE); DIPPE, Ralf, 47059 Duisburg (DE)
(74) Vertreter: Gottschald Patentanwälte Partnerschaft mbB
(86) Internationale Anmeldenummer: PCT/EP2016/067282
(87) Internationale Veröffentlichungsnummer: WO 2017/076523

(56) Entgegenhaltungen:
- EP-A1- 1 640 276
- EP-A1- 2 298 510
- GB-A- 2 078 668
- US-A- 5 232 540
- US-A- 5 750 004

## Beschreibung

Die vorliegende Erfindung betrifft einen Stempelfuß für einen Etikettenstempel einer Vorrichtung zum Etikettieren von einzelnen Packungen gemäß dem Oberbegriff des Anspruchs 1. Ferner betrifft die Erfindung eine Vorrichtung zum Etikettieren von einzelnen Packungen gemäß dem Oberbegriff des Anspruchs 15. Schließlich betrifft die Erfindung ein Verfahren zum Etikettieren von einzelnen Packungen unter Verwendung eines wie zuvor definierten Stempelfußes und/oder unter Verwendung einer wie zuvor definierten Vorrichtung gemäß dem Oberbegriff des Anspruchs 16.

Ein entsprechender Stempelfuß, eine entsprechende Vorrichtung und ein entsprechendes Verfahren sind beispielsweise bekannt aus der JP 2012-012069 A. Der bekannte Stempelfuß weist in seinem Innern eine Druckkammer auf, die oberseitig in einen Druckkanal mündet und unterseitig von einer mit dem Stempelfußgehäuse verbundenen Lochplatte mit einer Vielzahl von Düsen begrenzt ist. Zum Ansaugen eines Etiketts kann die Druckkammer über den Druckkanal mit einem Unterdruck beaufschlagt werden, wodurch das Etikett an der Gehäuseunterseite bzw. der Lochplatte angesaugt wird. Die Druckkammer kann auch mit einem Überdruck beaufschlagt werden, wodurch dann das Etikett abgeblasen und insbesondere auf eine zu etikettierende Packung übertragen wird. Der Stempelfuß ist also als kombinierter Ansaug- und Abblaskopf ausgebildet

Im Innern der Druckkammer des kombinierten Ansaug- und Abblaskopfes ist ein Steuerelement angeordnet, das zwischen zwei unterschiedliche Durchströmungen der Druckkammer bewirkenden Endpositionen verdrehbar ist. In den unterschiedlichen Endpositionen werden die Düsen in der Lochplatte innenseitig in unterschiedlicher Weise, insbesondere in unterschiedlicher Zahl, abgedeckt, wodurch der wirksame Querschnitt der Gesamtheit an Düsen in der Lochplatte an unterschiedliche Etikettengrößen angepasst werden kann.

Die EP 2 298 510 A1 zeigt einen Stempelfuß für einen Etikettenstempel einer Vorrichtung zum Etikettieren gemäß dem Oberbegriff des Anspruchs 1. Dieser weist eine mit Hauptdüsen versehene Lochplatte auf, die für eine bestimmte Etikettengröße ausgelegt ist.

Die US 5,232,540 Aloffenbart eine weitere Vorrichtung zum Etikettieren mit einem Stempelfuß. Dabei weist der Stempelfuß an der Unterseite des Stempelfußgehäuses Düsen auf, die je nach Etikettengröße zugeschalten werden können.

Sowohl aus der EP 1 640 276 B1 als auch aus der US 5,570,004 A1 sind weitere Etikettiervorrichtungen mit einer mit Düsen versehenen Lochplatte bekannt. Problematisch bei dem Stand der Technik ist, dass die Position des Steuerelements innerhalb der Druckkammer immer zunächst auf eine bestimmte Etikettengröße eingestellt werden muss, bevor der Stempelfuß einsatzbereit ist. Sollen zwischendurch Etiketten in einer anderen Größe von dem Stempelfuß angesaugt und abgeblasen werden, ist es notwendig, das Steuerelement innerhalb der Druckkammer vorher wieder zu verstellen. Die Handhabung des Stempelfußes und einer entsprechenden Etikettiervorrichtung, die einen Etikettenstempel mit einem solchen Stempelfuß aufweist, ist daher relativ kompliziert.

Es ist daher eine Aufgabe der vorliegenden Erfindung, einen Stempelfuß für einen Etikettenstempel und eine Vorrichtung und ein Verfahren zum Etikettieren von einzelnen Packungen anzugeben, womit eine einfachere Handhabung gewährleistet ist. Die zuvor hergeleitete und aufgezeigte Aufgabe wird gemäß einer ersten Lehre der vorliegenden Erfindung bei einem Stempelfuß für einen Etikettenstempel einer Vorrichtung zum Etikettieren von einzelnen Packungen
- mit einem Stempelfußgehäuse, das sich von einem ersten Gehäuseende mit einer ersten Gehäuseöffnung zu einem zweiten Gehäuseende mit einer zweiten Gehäuseöffnung in einer (axialen) Erstreckungsrichtung erstreckt,
- mit einem sich im Stempelfußgehäuse von der ersten Gehäuseöffnung in die Erstreckungsrichtung erstreckenden Druckkanal,
- mit einer die zweite Gehäuseöffnung verschließenden, mit dem Stempelfußgehäuse verbundenen Lochplatte, durch die sich mindestens eine Hauptdüse in einer Verlaufsrichtung erstreckt,
- mit einer sich im Stempelfußgehäuse von der Lochplatte entgegen der Erstreckungsrichtung erstreckenden Druckkammer, die orthogonal zur Erstreckungsrichtung, also in radialer Richtung, zu allen Seiten von einem Stempelfußgehäusewandabschnitt begrenzt ist,
- mit einem sich im Stempelfußgehäuse in der Erstreckungsrichtung zwischen dem Druckkanal und der Druckkammer erstreckenden Verbindungsabschnitt, der den Druckkanal mit der Druckkammer verbindet, und
- mit einem in der Druckkammer angeordneten Steuerelement, das zwischen zwei unterschiedliche Durchströmungen der Druckkammer bewirkenden Endpositionen, das heißt zwischen einer ersten und zweiten Endposition, bewegbar, insbesondere als Ganzes axial verschiebbar, ist
- wobei die mindestens eine Hauptdüse die Druckkammer mit der Umgebung (Außenseite) des Stempelfußgehäuses (fluidtechnisch, insbesondere pneumatisch) verbindet,
dadurch gelöst, dass sich durch den die Druckkammer orthogonal zur Erstreckungsrichtung zu allen Seiten begrenzenden Stempelfußgehäusewandabschnitt mindestens eine Nebendüse erstreckt, die die Druckkammer mit der Umgebung (Außenseite) des Stempelfußgehäuses (fluidtechnisch, insbesondere pneumatisch) verbindet, so dass beim Abblasen ein Etikett, welches größer ist als der Querschnitt des Stempelfußes an seinem unteren Ende, von aus der mindestens einen Nebendüse des Stempelfußes austretender Druckluft erfasst wird.

Bei dem erfindungsgemäßen Stempelfuß handelt es sich um einen kombinierten Ansaug- und Abblaskopf, der also alternativ sowohl ein Etikett an seiner Unterseite ansaugen kann als auch ein zuvor angesaugtes Etikett abblasen kann. Ein solcher Stempelfuß ist insbesondere Teil eines Etikettenstempels einer Vorrichtung zum Etikettieren von einzelnen Packungen, wie sie im Folgenden noch näher beschrieben wird.

Der erfindungsgemäße Stempelfuß hat den Vorteil, dass Etiketten in unterschiedlichen Größen von dem Stempelfuß manipuliert, das heißt angesaugt und abgeblasen, werden können, ohne dass dazu der Stempelfuß vor dem Wechsel auf eine andere Etikettengröße von Hand verstellt werden müsste. Insbesondere muss das Steuerelement nicht jedes Mal separat (aktiv) verstellt werden wenn zu einer anderen Etikettengröße gewechselt werden soll. So erlaubt die erfindungsgemäße mindestens eine Nebendüse in einer Seitenwand des Stempelfußgehäuses, dass beim Abblasen ein Etikett, welches größer ist als der Querschnitt des Stempelfußes an seinem unteren Ende, insbesondere im Bereich der Lochplatte, über seine gesamte Oberfläche von aus dem Stempelfuß austretender Druckluft erfasst wird. Bei einem kleineren Etikett wird dessen Oberfläche dagegen beispielsweise nur von Druckluft erfasst, die aus den Hauptdüsen austritt.

Ein weiterer Vorteil des erfindungsgemäßen Stempelfußes ist, dass beim Ansaugen, wenn also die Druckkammer über den Druckkanal mit Unterdruck beaufschlagt ist, das Steuerelement die mindestens eine Nebendüse verschließt, wodurch der Saugdruck zum Ansaugen und Halten des Etiketts ausschließlich über die Hauptdüsen aufgebaut werden muss. Dadurch muss zum Ansaugen lediglich ein vergleichsweise geringer Unterdruck aufgebaut werden, dessen Absolutwert insbesondere kleiner als der des Überdrucks zum Abblasen ist. Sobald dann die Druckkammer über den Druckkanal wieder mit Überdruck beaufschlagt wird, wird das Steuerelement automatisch in die Erstreckungsrichtung axial verschoben und gibt dadurch automatisch die mindestens eine Nebendüse wieder frei, so dass bei dem dann erfolgenden Druckluftstoß die Luft sowohl aus Hauptdüsen als auch Nebendüsen austreten kann.

Im Folgenden werden nun verschiedene Ausgestaltungen des erfindungsgemäßen Stempelfußes beschrieben, die auch Gegenstand der Unteransprüche sind.

So sind gemäß einer Ausgestaltung mehrere Hauptdüsen und/oder mehrere Nebendüsen vorgesehen.

Die mindestens eine Düse oder mehrere der Düsen sind jeweils insbesondere als röhrenförmiger Kanal, vorzugsweise Bohrung oder zur Außenseite des Stempelfußgehäuses vorstehende Röhre (der röhrenförmige Kanal ist dann nach außen verlängert), ausgebildet. Zusätzlich oder alternativ ist es auch denkbar, auch in dem Fall, dass nur eine Hauptdüse und/oder Nebendüse vorgesehen ist, dass diese jeweils schlitzförmig ausgebildet ist. Auch mehrere schlitzförmige Hauptdüsen und/oder Nebendüsen können vorgesehen sein und insbesondere mit röhrenförmigen Hauptdüsen und/oder Nebendüsen kombiniert sein.

Insbesondere ist vorgesehen, dass der Querschnitt der mindestens einen Hauptdüse in Verlaufsrichtung bzw. Erstreckungsrichtung erweitert ist, wobei die Querschnittserweiterung vorzugsweise nur in einem Endabschnitt am (benachbart zum) nach außen weisenden (unteren) Düsenende vorgesehen ist, um im Fall eines Unterdrucks in der Druckkammer eine Erhöhung des Saugdrucks am unteren Düsenende zu erreichen, wodurch eine verbesserte Anhaftung eines Etiketts gewährleistet wird. Alternativ kann der Düsenquerschnitt der mindestens einen Hauptdüse aber auch konstant sein oder sich nach außen verjüngen. Auch der Düsenquerschnitt der mindestens einen Nebendüse ist insbesondere konstant, kann aber auch nach außen hin verjüngt oder erweitert sein.

Gemäß noch einer Ausgestaltung ist vorgesehen, dass die mindestens eine Hauptdüse in der Erstreckungsrichtung von der mindestens einen Nebendüse beabstandet ist. Beabstandet bedeutet, dass sich eine radiale Projektion (Projektion in einer Richtung orthogonal zur Erstreckungsrichtung) der mindestens einen Hauptdüse und der mindestens einen Nebendüse nicht überschneiden. Es ist aber auch denkbar, dass sich die radialen Projektionen überschneiden, wobei dann aber die jeweiligen Mittelpunkte der zur Druckkammer weisenden (inneren) Düsenöffnungen in voneinander beabstandeten Ebenen liegen, die orthogonal zur Erstreckungsrichtung verlaufen.

Gemäß noch einer Ausgestaltung ist vorgesehen, dass die mindestens eine Nebendüse zumindest abschnittsweise, vorzugsweise vollständig, winkelig zur Erstreckungsrichtung und insbesondere winkelig zur Verlaufsrichtung der mindestens einen Hauptdüse verläuft. Insbesondere verläuft die mindestens eine Hauptdüse parallel zur Erstreckungsrichtung oder in einem Winkel von weniger als 10°, bevorzugt weniger als 5°, besonders bevorzugt weniger als 2°, zur Erstreckungsrichtung. Zusätzlich oder alternativ verläuft die mindestens eine Nebendüse in einem Winkel von mehr als 20°, bevorzugt mehr als 30°, besonders bevorzugt mehr als 40°, zur Erstreckungsrichtung.

Gemäß wieder einer weiteren Ausgestaltung ist vorgesehen, dass die außenseitige Öffnung einer jeden Nebendüse näher am zweiten Gehäuseende des Stempelfußgehäuses liegt als die innenseitige Öffnung der jeweiligen Nebendüse. Mit der außenseitigen Öffnung ist die Öffnung der Düse an ihrem von der Druckkammer abgewandten Ende gemeint. Entsprechend ist mit der innenseitigen Öffnung die Öffnung an ihrem zur Druckkammer hin gewandten Ende gemeint.

Der sich jeweils zwischen der außenseitigen und der innenseitigen Öffnung erstreckende Kanal ist dabei insbesondere gerade und/oder hat insbesondere einen gleichmäßigen Querschnitt. Auf diese Weise lassen sich die Nebendüsen in der Gehäusewand bzw. dem entsprechenden Stempelfußgehäusewandabschnitt besonders einfach herstellen. In dem Fall, dass mehrere Nebendüsen vorgesehen sind, ist es bevorzugt, dass diese in gleichmäßigen Abständen über den Umfang des Stempelfußgehäuses verteilt sind und insbesondere alle denselben Abstand und dieselbe Ausrichtung zu den Hauptdüsen in der Lochplatte haben.

Gemäß noch einer weiteren Ausgestaltung ist vorgesehen, dass das Steuerelement die Druckkammer in der Erstreckungsrichtung in einen ersten (oberen bzw. stempelschaftseitigen) Druckkammerabschnitt und einen zweiten (unteren bzw. lochplattenseitigen) Druckkammerabschnitt unterteilt, wobei der erste Druckkammerabschnitt zwischen dem Steuerelement und dem Verbindungsabschnitt und der zweite Druckkammerabschnitt zwischen dem Steuerelement und der Lochplatte liegt. Dabei ist es insbesondere denkbar, dass der erste Druckkammerabschnitt mit dem zweiten Druckkammerabschnitt über mindestens eine erste Verbindungsöffnung im Steuerelement oder über mindestens eine erste Verbindungsöffnung zwischen dem Steuerelement und dem die Druckkammer orthogonal zur Erstreckungsrichtung zu allen Seiten begrenzenden Stempelfußgehäusewandabschnitt (fluidtechnisch bzw. pneumatisch) verbunden ist. Zusätzlich oder alternativ ist insbesondere vorgesehen, dass der erste Druckkammerabschnitt mit dem Verbindungsabschnitt über mindestens eine zweite Verbindungsöffnung im Steuerelement oder über mindestens eine zweite Verbindungsöffnung zwischen dem Steuerelement und einer den Verbindungsabschnitt orthogonal zur Erstreckungsrichtung zu allen Seiten begrenzenden weiteren Stempelfußgehäusewandabschnitt (fluidtechnisch bzw. pneumatisch) verbunden ist.

Gemäß einer weiteren Ausgestaltung ist der erste Druckkammerabschnitt mit der Umgebung (Außenseite) des Stempelfußgehäuses über die mindestens eine Nebendüse (fluidtechnisch bzw. pneumatisch) verbunden.

Wie bereits angedeutet ist gemäß noch einer Ausgestaltung vorgesehen, dass das Steuerelement und die Druckkammer derart ausgebildet sind, dass das Steuerelement in seiner ersten Endposition die mindestens eine Nebendüse vollständig verschließt und/oder in seiner zweiten Endposition die mindestens eine Nebendüse vollständig freigibt. In der ersten Endposition ist das Steuerelement in der Druckkammer dann so angeordnet, dass ausschließlich die mindestens eine Hauptdüse bzw. die Hauptdüsen aktiv sind, wohingegen die mindestens eine Nebendüse bzw. die Nebendüsen dann zwingend inaktiv sind. In diesem Zustand kann eine Saugströmung durch die Hauptdüsen in das Stempelfußgehäuse geleitet werden, durch die ein Etikett unterseitig im Bereich der Lochplatte angesaugt werden kann. Wird dann durch Erzeugen eines Überdrucks im Stempelfußgehäuse und insbesondere in der Druckkammer das Steuerelement in der Druckkammer in die zweite Endposition verschoben, wird dadurch die mindestens eine Nebendüse bzw. die Nebendüsen aktiviert, so dass eine Druckströmung sowohl aus der oder den Nebendüsen als auch aus der oder den Hauptdüsen austritt und dadurch das Etikett abgeblasen wird.

Gemäß wieder einer weiteren Ausgestaltung ist vorgesehen, dass das Steuerelement einen plattenförmigen Abschnitt aufweist, der sich in der Druckkammer, insbesondere zwischen dem ersten Druckkammerabschnitt und dem zweiten Druckkammerabschnitt orthogonal zur Erstreckungsrichtung erstreckt. Mit einem plattenförmigen Abschnitt ist ein Abschnitt gemeint, dessen Oberseite und Unterseite parallel zueinander verlaufen und dessen Dicke (axiale Erstreckung) kleiner als dessen Längserstreckung und/oder Quererstreckung (radiale Erstreckung) ist. Dabei ist es insbesondere denkbar, dass die mindestens eine Verbindungsöffnung in dem plattenförmigen Abschnitt oder zwischen dem plattenförmigen Abschnitt und dem die Druckkammer orthogonal zur Erstreckungsrichtung zu allen Seiten begrenzenden Stempelfußgehäusewandabschnitt angeordnet ist.

Bevorzugt ist dabei vorgesehen, dass die Druckkammer einen zur Erstreckungsrichtung orthogonalen Wandabschnitt (an dem Ende der Druckkammer, das an den Verbindungsabschnitt angrenzt) mit einer zur Lochplatte weisenden Wandfläche, insbesondere mit einem zur Druckkammer weisenden umlaufenden Vorsprung, der vorzugsweise von einem Dichtring gebildet wird, aufweist, wobei an dem Vorsprung in der ersten Endposition das Steuerelement anliegt, wobei die mindestens eine erste Verbindungsöffnung vollständig freigegeben ist. Der Vorsprung bzw. Dichtring ragt soweit aus der zur Lochplatte weisenden Wandfläche hervor, dass in der ersten Position des Steuerelements ein Spalt (flacher Raum) zwischen der Oberseite des plattenförmigen Abschnitts des Steuerelements und der zur Lochplatte weisenden Wandfläche verbleibt. Die mindestens eine erste Verbindungsöffnung mündet dann oberseitig in diesen Spalt bzw. flachen Raum, der wiederum insbesondere ständig mit der mindestens einen zweiten Verbindungsöffnung und darüber ständig mit dem Druckkanal (fluidtechnisch bzw. pneumatisch) verbunden ist. Auf diese Weise ist garantiert, dass beim Ansaugen, wenn sich das Steuerelement in der ersten Position befindet, immer eine fluidtechnische Verbindung von der mindestens einen Hauptdüse über die mindestens eine erste Verbindungsöffnung, dann weiter über die mindestens eine zweite Verbindungsöffnung in den Druckkanal besteht.

Gemäß noch einer weiteren Ausgestaltung ist vorgesehen, dass das Steuerelement einen kragenförmigen Abschnitt aufweist, der mit dem plattenförmigen Abschnitt verbunden ist und sich insbesondere von dem plattenförmigen Abschnitt in die Erstreckungsrichtung zur Lochplatte erstreckt. Der kragenförmige Abschnitt erstreckt sich insbesondere orthogonal zu dem plattenförmigen Abschnitt. Der kragenförmige Abschnitt dient insbesondere zum sicheren (insbesondere luftdichten) Verschließen der mindestens einen Nebendüse, wenn sich das Steuerelement in der ersten Position befindet. Letzteres kann zumindest teilweise auch von dem plattenförmigen Abschnitt übernommen werden. So ist es insbesondere zu diesem Zweck denkbar, dass der plattenförmige Abschnitt und/oder der kragenförmige Abschnitt innenseitig an dem die Druckkammer orthogonal zur Erstreckungsrichtung zu allen Seiten begrenzenden Stempelfußgehäusewandabschnitt anliegt und insbesondere in der ersten Endposition die mindestens eine Nebendüse verschließt.

Gemäß noch einer Ausgestaltung ist vorgesehen, dass das Steuerelement einen schaftförmigen hohlen Abschnitt aufweist, der mit dem plattenförmigen Abschnitt verbunden ist und sich insbesondere von dem plattenförmigen Abschnitt entgegen der Erstreckungsrichtung zum Druckkanal hin erstreckt. Der schaftförmige Abschnitt ist insbesondere auf der Oberseite des plattenförmigen Abschnitts angeordnet, die der Unterseite mit dem kragenförmigen Abschnitt abgewandt ist. Dabei ist denkbar, dass der schaftförmige Abschnitt eine zum plattenförmigen Abschnitt orthogonale Schaftwand aufweist, die an ihrem druckkanalseitigen Ende eine zum Druckkanal koaxiale Öffnung umgrenzt (bildet), wobei die mindestens eine Verbindungsöffnung in der Schaftwand angeordnet ist. Die Mittelachse der koaxialen Öffnung ist dabei insbesondere identisch mit der Mittelachse des Druckkanals und/oder Verbindungsabschnitts. Die Mittelachse der mindestens einen zweiten Verbindungsöffnung verläuft dann vorzugsweise orthogonal zur Mittelachse der koaxialen Öffnung und Erstreckungsrichtung.

Gemäß noch einer Ausgestaltung ist vorgesehen, dass der schaftförmige Abschnitt im Verbindungsabschnitt innenseitig anliegt und darin beweglich, insbesondere axial beweglich, bevorzugt ausschließlich axial beweglich, geführt ist, wobei insbesondere in der ersten Endposition und/oder zweiten Endposition des Steuerelements die mindestens eine zweite Verbindungsöffnung vollständig freigegeben ist. Die mindestens eine zweite Verbindungsöffnung wird also auch in der ersten Endposition des Steuerelements nicht verdeckt, sondern gewährleistet, dass eine Saugströmung von der oder den Hauptdüsen über die mindestens eine erste Verbindungsöffnung in den Druckkanal bzw. entsprechend in die umgekehrte Richtung geführt werden kann.

Gemäß einer weiteren Ausgestaltung ist vorgesehen, dass die Gesamtquerschnittsfläche, das heißt die Summe aller einzelnen Querschnittsflächen, aller Hauptdüsen
- zumindest so groß ist wie oder größer ist als die Gesamtquerschnittsfläche aller Nebendüsen und/oder
- höchstens so groß ist wie oder kleiner ist als die Gesamtquerschnittsfläche aller ersten Verbindungsöffnungen und/oder aller zweiten Verbindungsöffnungen.

Zusätzlich oder alternativ ist die Gesamtquerschnittsfläche aller zweiten Verbindungsöffnungen
- höchstens so groß wie oder kleiner als die Gesamtquerschnittsfläche aller ersten Verbindungsöffnungen und/oder
- höchstens so groß wie oder kleiner als die Querschnittsfläche der zum Druckkanal weisenden koaxialen Öffnung des schaftförmigen Abschnitts.

Gemäß noch einer weiteren Ausgestaltung ist vorgesehen, dass der Verbindungsabschnitt einen Abschnitt mit einer Querschnittserweiterung an seinem der Lochplatte zugewandten Ende aufweist, wobei in der ersten Endposition des Steuerelements die mindestens eine zweite Verbindungsöffnung in den Abschnitt mit der Querschnittserweiterung mündet. Dabei liegt der Mittelpunkt der mindestens einen zweiten Verbindungsöffnung und insbesondere die gesamte mindestens eine zweite Verbindungsöffnung innerhalb des Raums, der radial von dem Abschnitt mit der Querschnittserweiterung begrenzt wird. Der Abschnitt mit der Querschnittserweiterung wirkt dann beim Umschalten von einem Unterdruck zu einem Überdruck, wenn sich das Steuerelement noch in der ersten Endposition befindet, derart, dass die vom Druckkanal in den schaftförmigen Abschnitt gelangende Druckströmung durch die mindestens eine zweite Verbindungsöffnung radial austritt und an dem Abschnitt mit der Querschnittserweiterung in axialer Richtung so umgelenkt wird, dass der Hauptanteil der Druckströmung zunächst auf einen Teilabschnitt des plattenförmigen Abschnitts des Steuerelements trifft, der frei von ersten Verbindungsöffnungen ist. Dadurch wird das Steuerelement besonders schnell von der ersten Endposition in die zweite Endposition verlagert, was die Erzeugung eines schlagartigen Druckluftstoßes zum Abblasen eines Etiketts begünstigt.

Der Abschnitt mit der Querschnittserweiterung ist insbesondere sich kontinuierlich erweiternd und vorzugsweise trichterförmig ausgebildet, das heißt die Innenfläche des Abschnitts mit der Querschnittserweiterung erweitert sich in der Erstreckungsrichtung nur allmählich und nicht schlagartig wie bei einer rechtwinkligen Erweiterung. Insbesondere verläuft die Innenfläche des Abschnitts mit der Querschnittserweiterung in einem Winkel in einem Bereich von 30 bis 60°, bevorzugt in einem Bereich von 35 bis 55°, besonders bevorzugt in einem Bereich von 40 bis 50°, zur Erstreckungsrichtung und verläuft beispielsweise in einem Winkel von 45° zur Erstreckungsrichtung. Dabei endet der Abschnitt mit der Querschnittserweiterung an einer Kante, bei der es sich auch um eine abgerundete Kante handeln kann, die den Übergang zwischen dem Abschnitt mit der Querschnittserweiterung und dem oberen Wandabschnitt bildet, der den umlaufenden Vorsprung oder Dichtring aufweisen kann.

Gemäß noch einer weiteren Ausgestaltung ist vorgesehen, dass das Stempelfußgehäuse zweiteilig aufgebaut ist, wobei ein erstes Gehäuseteil den Druckkanal und ein zweites Gehäuseteil den Verbindungsabschnitt, die Druckkammer und die Lochplatte aufweist, wobei insbesondere das erste Gehäuseteil mit dem zweiten Gehäuseteil luftdicht verbunden, vorzugsweise zusammengesteckt, ist. Insbesondere sind das erste Gehäuseteil und das zweite Gehäuseteil miteinander verschraubt oder in axialer Richtung kraftschlüssig, beispielsweise magnetisch, miteinander verbunden. Zusätzlich oder alternativ ist auch eine stoffschlüssige und/oder formschlüssige Verbindung zwischen den beiden Gehäuseteilen denkbar. Alternativ ist es auch denkbar, den ersten Gehäuseteil und den zweiten Gehäuseteil zusammen einstückig (integral, aus einem Stück bestehend) auszubilden. Auch die Lochplatte kann zusammen mit dem zweiten Gehäuseteil oder dem Stempelfußgehäuse insgesamt einstückig ausgeführt sein. Es ist aber auch denkbar, die Lochplatte als separates Bauteil, insbesondere kraftschlüssig, aber auch formschlüssig und/oder stoffschlüssig, mit dem zweiten Gehäuseteil zu verbinden. Eine einstückige Ausbildung ist insbesondere auch denkbar für das Steuerelement, das heißt plattenförmiger Abschnitt, kragenförmiger Abschnitt und/oder schaftförmiger Abschnitt sind zusammen einstückig ausgeführt. Ferner ist auch denkbar, insbesondere bei einer einstückigen Ausführung des Stempelfußgehäuses zusammen mit der Lochplatte, das Stempelfußgehäuse mit der Lochplatte und dem darin angeordneten Steuerelement in einem gemeinsamen Arbeitsgang (einzelnen Herstellungsschritt) als Einheit herzustellen, insbesondere durch ein 3D-Druckverfahren.

Die zuvor hergeleitete Aufgabe wird ferner gemäß einer zweiten Lehre der vorliegenden Erfindung bei einer Vorrichtung zum Etikettieren von einzelnen Packungen
- mit einer Vorschubeinrichtung zum Transport einer jeweiligen Packung entlang eines Transportweges,
- mit einer Etikettenspendeeinrichtung zum Bereitstellen eines, insbesondere zuvor bedruckten, Etiketts und
- mit einer Etikettenaufbringeinrichtung mit einem Etikettenstempel, der einen Stempelschaft und einen damit verbundenen Stempelfuß aufweist,
- wobei der Etikettenstempel zwischen einer Spendepositon, in der ein gespendetes Etikett von dem Stempelfuß ansaugbar ist, und einer Aufbringposition, in der das angesaugte Etikett auf die jeweilige Packung abblasbar ist, bewegbar ist,
dadurch gelöst, dass der Stempelfuß wie zuvor beschrieben ausgebildet ist.

Bei dem Etikettenstempel handelt es sich insbesondere um einen linear verfahrbaren Blasstempel, der parallel zum Transportweg, insbesondere in einer Richtung oder zwei zueinander orthogonalen Richtungen, linear verfahrbar ist, wobei der Etikettenstempel ferner orthogonal zum Transportweg linear verfahrbar sein kann. Außerdem kann der Etikettenstempel in einer Ausgestaltung um die senkrecht (in vertikaler Richtung) zum Transportweg verlaufende Achse drehbar gelagert sein. Alternativ kann der Etikettenstempel auch als sogenannter Blaspendelstempel ausgeführt sein, der schwenkbar gelagert ist, so dass der Stempelfuß eine Pendelbewegung entlang des Transportweges durchführen kann. Zusätzlich ist auch der Blaspendelstempel insbesondere horizontal und vertikal verfahrbar.

Der Stempel weist wie gesagt einen Stempelschaft, der insbesondere als Hohlwelle ausgeführt ist, auf. Der Stempelschaft ist insbesondere lösbar mit dem Stempelfuß verbunden, vorzugsweise über eine Schnellspanneinrichtung. Zusätzlich oder alternativ kann auch das erste Gehäuseteil mit dem zweiten Gehäuseteil des Stempelfußgehäuses lösbar verbunden sein, beispielsweise auch über eine Schnellspanneinrichtung. Eine Schnellspanneinrichtung kann, um einige Beispiele zu nennen, von einer magnetischen Verbindung zwischen den beiden Verbindungspartnern (erster Gehäuseteil/zweiter Gehäuseteil; Stempelschaft/Stempelfuß) oder einer Schraubverbindung oder einer Verbindung mittels radial beweglicher Arretierungsbolzen gebildet sein. Beispielsweise verfügt der Stempelfuß an seinem ersten Ende über ein zu dem Stempelschaft korrespondierendes Anschlussstück, in das der Stempelschaft insbesondere einführbar ist. In diesem Anschlussstück können dann in radialer Richtung zur Mittelachse des Stempelfußes hin federkraftbeaufschlagte Arretierungsbolzen sitzen, die insbesondere eine abgerundete oder abgeschrägte Oberfläche aufweisen, so dass der Stempelschaft beim Einführen in das Anschlussstück die Bolzen zunächst radial nach außen drückt und anschließend in seiner Endstellung die Bolzen in dazu korrespondierende Aussparungen im Stempelschaft eingreifen. Zum Entfernen des Stempelschafts vom Stempelfuß kann dasselbe Prinzip angewandt werden. Eine solche Verbindung kann auch zwischen erstem und zweitem Gehäuseteil vorgesehen sein. Durch eine solche Schnellspanneinrichtung läßt sich im Bedarfsfall ein Stempelfuß oder der die Düsen aufweisende Teil davon mit einfachen Mitteln sehr schnell auswechseln.

Schließlich wird die zuvor hergeleitete und aufgezeigte Aufgabe gemäß einer dritten Lehre der vorliegenden Erfindung bei einem Verfahren zum Etikettieren von einzelnen Packungen unter Verwendung eines wie zuvor definierten Stempelfußes und/oder unter Verwendung einer wie zuvor definierten Vorrichtung, dadurch gelöst,
- dass ein Etikett von dem Stempelfuß an dessen zweitem Gehäuseende angesaugt wird, indem der Stempelfuß an seinem ersten Gehäuseende mit einem Unterdruck beaufschlagt wird, wobei durch den Unterdruck eine Saugströmung im Stempelfuß entgegen der Erstreckungsrichtung erzeugt wird, die (automatisch, das heißt ohne zusätzliche Maßnahmen und insbesondere ohne Eingreifen des Anwenders) das Steuerelement in seine erste Endposition bewegt,
- dass das Etikett dann im angesaugten Zustand unter Beibehaltung des Unterdrucks vom Stempelfuß transportiert wird und
- dass das Etikett dann von dem Stempelfuß an seinem zweiten Gehäuseende (auf eine Packung) abgeblasen wird, indem der Stempelfuß an seinem ersten Gehäuseende mit einem Überdruck beaufschlagt wird, wobei durch den Überdruck eine Druckströmung im Stempelfuß in die Erstreckungsrichtung erzeugt wird, die (automatisch, das heißt ohne zusätzliche Maßnahmen und insbesondere ohne Eingreifen des Anwenders) das Steuerelement in seine zweite Endposition bewegt.

Gemäß einer Ausgestaltung des erfindungsgemäßen Verfahrens ist vorgesehen, dass in der ersten Endposition die Saugströmung ausschließlich durch die mindestens eine Hauptdüse in das Stempelfußgehäuse eintritt. Insbesondere verläuft die Saugströmung von der oder den Hauptdüsen weiter durch die mindestens eine erste Verbindungsöffnung, dann weiter durch die mindestens eine zweite Verbindungsöffnung und gelangt im weiteren Verlauf in den Druckkanal.

Zusätzlich oder alternativ kann vorgesehen sein, dass in der zweiten Endposition die Druckströmung sowohl durch die mindestens eine Hauptdüse als auch (gleichzeitig) durch die mindestens eine Nebendüse aus dem Stempelfußgehäuse austritt. Bevor die Druckströmung aus der oder den Hauptdüsen und der oder den Nebendüsen austritt, wird diese insbesondere vom Druckkanal zunächst durch die mindestens eine zweite Verbindungsöffnung geleitet. Hier tritt dann ein Teil der Druckströmung durch die mindestens eine Nebendüse nach außen aus. Der übrige Teil der Druckströmung wird in diesem Fall durch die mindestens eine Verbindungsöffnung zu der mindestens einen Hauptdüse geleitet und tritt dort in die Umgebung aus.
Es gibt nun eine Vielzahl von Möglichkeiten, den erfindungsgemäßen Stempelfuß, die erfindungsgemäße Vorrichtung und das erfindungsgemäße Verfahren auszugestalten und weiterzubilden. Diesbezüglich sei einerseits verwiesen auf die den nebengeordneten Patentansprüchen 1, 15 und 16 nachgeordneten Patentansprüche, andererseits auf die Beschreibung von Ausführungsbeispielen in Verbindung mit der Zeichnung. In der Zeichnung zeigt:
- Fig. 1: eine Seitenansicht eines erfindungsgemäßen Stempelfußes,
- Fig. 2: eine Schnittansicht des Stempelfußes aus Fig. 1 und
- Fig. 3: eine schematische Ansicht einer Vorrichtung zum Etikettieren von einzelnen Packungen unter Verwendung des Stempelfußes aus Fig. 1 und 2.

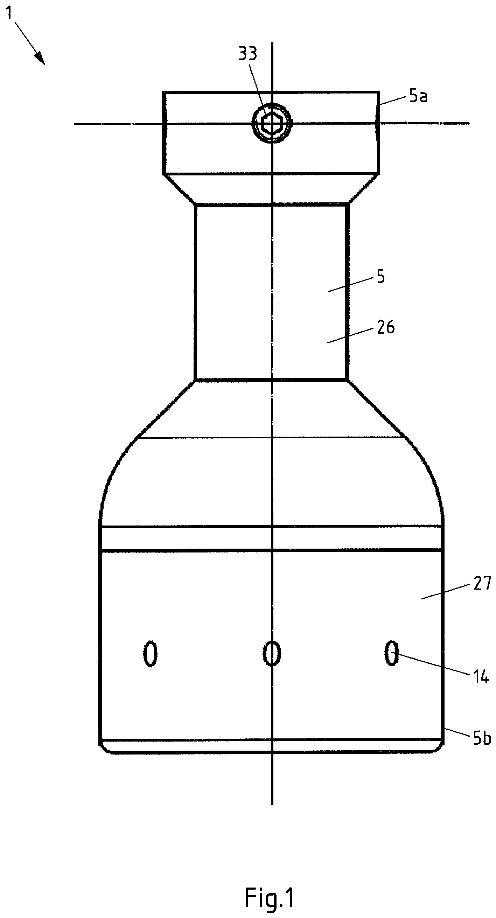

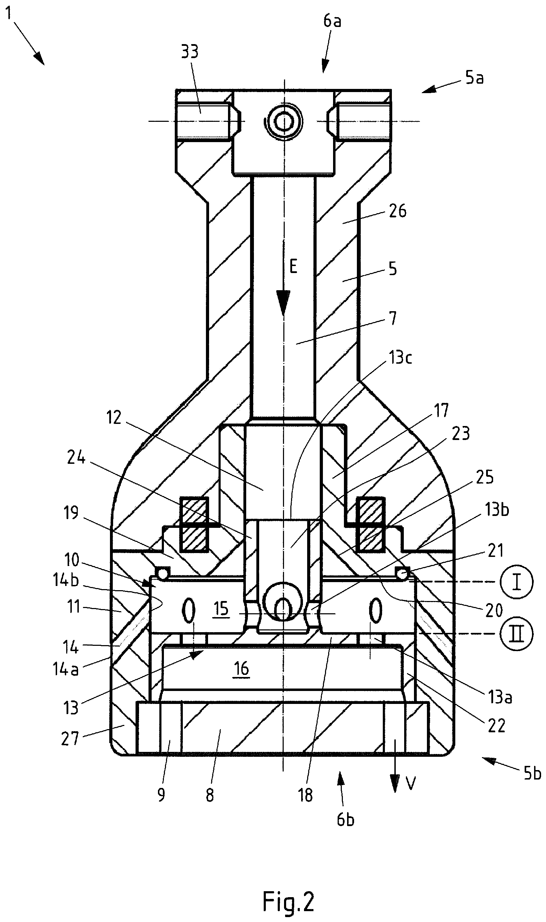

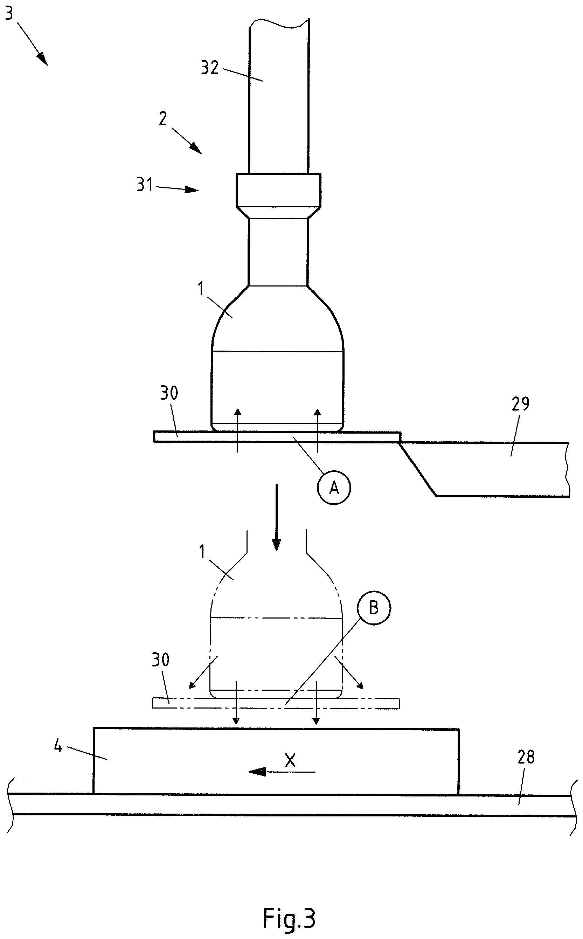

In den Figuren 1 und 2 ist ein Stempelfuß 1 in Form eines kombinierten Ansaug- und Abblaskopfes für einen Etikettenstempel 2 zum Einsatz in einer Vorrichtung 3 zum Etikettieren von einzelnen Packungen 4 dargestellt. Die Funktion des Stempelfußes 1 in Verbindung mit dem Etikettenstempel 2 innerhalb der Vorrichtung 3 ist in Fig. 3 schematisch dargestellt.
Der Stempelfuß 1 weist ein Stempelfußgehäuse 5 auf, das um eine in eine Erstreckungsrichtung E verlaufende Mittelachse symmetrisch, insbesondere rotationssymmetrisch, ausgebildet ist. Das Stempelfußgehäuse 5 erstreckt sich in besagter axialer Erstreckungsrichtung E von einem ersten Gehäuseende 5a mit einer ersten Gehäuseöffnung 6a zu einem zweiten Gehäuseende 5b mit einer zweiten Gehäuseöffnung 6b. Das Stempelfußgehäuse 5 ist hier beispielhaft zweiteilig aufgebaut und besteht aus einem ersten (oberen) Gehäuseteil 26 und einem zweiten (unteren) Gehäuseteil 27, wobei die beiden Gehäuseteile 26 und 27 fest und insbesondere luftdicht miteinander durch kraftschlüssiges Zusammenstecken, hier durch Magnetkraft, verbunden sind. Durch eine solche Schnellspanneinrichtung in Form einer magnetischen Verbindung ist der zweite, die Düsen 9 und 14 aufweisende Gehäuseteil 27 im Bedarfsfall einfach und schnell vom ersten Gehäuseteil 26 lösbar.

Im Bereich des oberen Gehäuseendes 5a weist der Stempelfuß 1 eine weitere Schnellspanneinrichtung 33 in Form mehrerer radial angeordneter, federkraftbeaufschlagter, vorderseitig abgerundeter Bolzen auf, wodurch der Stempelfuß 1 mit einem Stempelschaft 32, wie in Fig. 3 gezeigt, auf einfache Weise zusammengesteckt werden kann.

Das Innere des Stempelfußes 1 wird besonders anhand von Fig. 2 deutlich.

So weist das Stempelfußgehäuse 5 einen Druckkanal 7 auf, der sich von der ersten Gehäuseöffnung 6a in Erstreckungsrichtung E erstreckt.

Die zweite Gehäuseöffnung 6b ist durch eine Lochplatte 8 vollständig ausgefüllt und dadurch verschlossen, wobei sich durch die Lochplatte 8 mehrere Hauptdüsen 9 in einer Verlaufsrichtung V erstrecken.

Ausgehend von der Lochplatte 8, insbesondere von deren Innenseite (Oberseite), erstreckt sich entgegen der Erstreckungsrichtung E eine Druckkammer 10, die seitlich von einem umlaufenden Stempelfußgehäusewandabschnitt 11 begrenzt ist. Weiter nach oben hin, das heißt entgegen der Erstreckungsrichtung E, wird die Druckkammer 10 von einem orthogonal zur Erstreckungsrichtung E verlaufenden Wandabschnitt 19 und einem Verbindungsabschnitt 12, der den Druckkanal 7 mit der Druckkammer 10 fluidtechnisch verbindet, begrenzt.

Im Innern der Druckkammer 10 ist ein Steuerelement 13 axial beweglich angeordnet. Das Steuerelement 13 kann zwischen einer ersten Endposition I und einer zweiten Endposition II durch Anströmen hin- und herbewegt werden. Jede Endposition bewirkt eine andere Durchströmung der Druckkammer 10. So wird bei Beaufschlagen des Innern des Stempelfußes 1 mit einem Unterdruck das Steuerelement 13 automatisch in die erste Endposition I bewegt, und zwar allein durch die Anströmung bzw. die Saugkraft, die auf das Steuerelement 13 wirkt. Wird dann das Innere des Stempelfußes 1 mit einem Überdruck beaufschlagt, wird dadurch automatisch das Steuerelement 13 in die zweite Endposition II bewegt, und zwar auch allein durch die Anströmung bzw. Druckkraft, die auf das Steuerelement 13 wirkt.

Der Stempelfußgehäusewandabschnitt 11, der die Druckkammer 10 seitlich umgibt, weist mehrere Nebendüsen 14 auf, die umfänglich im gleichen Abstand angeordnet sind und die Druckkammer 10 mit der Umgebung des Stempelfußgehäuses 5 verbinden. Befindet sich das Steuerelement 13 in der ersten Endposition I, werden die Nebendüsen 14 von dem Steuerelement 13 innenseitig abgedeckt und dadurch deaktiviert. In diesem Zustand findet keine Durchströmung der Nebendüsen 14 statt. Befindet sich dagegen das Steuerelement 13 in der zweiten Endposition II, sind die Nebendüsen 14 vollständig freigegeben und können aus der Druckkammer 10 heraus durchströmt werden.

Die in der Lochplatte 8 angeordneten Hauptdüsen 9 sind dagegen in jeder der Endpositionen I und II des Steuerelements 13 durchströmbar.

Wie Fig. 2 ferner zeigt, sind die Nebendüsen 14 in einem Abschnitt des Stempelfußgehäuses 5 oberhalb der Hauptdüsen 9 angeordnet. Außerdem liegen die Nebendüsen 14 radial weiter außen als die Hauptdüsen 9. Schließlich haben die Nebendüsen 14 auch einen anderen Verlauf (andere Verlaufsrichtung) als die Hauptdüsen 9. So verlaufen die Hauptdüsen 9 nämlich parallel zur Erstreckungsrichtung E, wohingegen die Nebendüsen 14 einen schrägen Verlauf haben, derart, dass die außenseitige Öffnung 14a einer jeden Nebendüse 14 näher am zweiten Gehäuseende 5b als die jeweilige innenseitige Öffnung 14b der Nebendüse 14 liegt. Im vorliegenden Ausführungsbeispiel verlaufen die Nebendüsen 14 in einem Winkel in einem Bereich von 40 bis 45° zur Erstreckungsrichtung E.

Bei allen Düsen, sowohl den Hauptdüsen 9 als auch den Nebendüsen 14, handelt es sich hier beispielhaft um röhrenförmige Kanäle, insbesondere Bohrungen. Zusätzlich oder alternativ können einzelne oder alle der Düsen 9 bzw. 14 auch von einer nach außen verlängerten Röhre gebildet werden und/oder schlitzförmig ausgebildet sein.

Die Druckkammer 10 wird von dem Steuerelement 13 unterteilt in einen ersten (oberen) Druckkammerabschnitt 15 und einen zweiten (unteren) Druckkammerabschnitt 16, wobei letzterer an die Lochplatte 8 angrenzt. Das Steuerelement 13 besteht hier aus einem plattenförmigen Abschnitt 18, einem unterseitig daran angeordneten kragenförmigen Abschnitt 22 und einem oberseitig daran angeordneten schaftförmigen hohlen Abschnitt 23. In dem plattenförmigen Abschnitt 18 verlaufen, in gleichmäßigen Abständen über den Umfang verteilt, mehrere erste Verbindungsöffnungen 13a, die sich durch den plattenförmigen Abschnitt 18 von dem ersten Druckkammerabschnitt 15 zum zweiten Druckkammerabschnitt 16 erstrecken. Der kragenförmige Abschnitt 22 erstreckt sich in einem Abschnitt radial außerhalb der ringförmig angeordneten ersten Verbindungsöffnungen 13a. Der schaftförmige Abschnitt 23 erstreckt sich radial innerhalb der ringförmig angeordneten ersten Verbindungsöffnungen 13a.

Der kragenförmige Abschnitt 22 ist frei von weiteren Öffnungen und dient dazu, in der ersten Endposition I die Nebendüsen 14 innenseitig zu verschließen.

Der schaftförmige Abschnitt 23 weist mehrere, im gleichen Abstand umfänglich angeordnete, radiale zweite Verbindungsöffnungen 13b auf, hier beispielhaft vier zweite Verbindungsöffnungen 13b, sowie an seinem oberen Ende eine zum Druckkanal 7 koaxiale Öffnung 13c. Der schaftförmige Abschnitt 23 ist in einem den Verbindungsabschnitt 12 seitlich begrenzenden weiteren Stempelfußgehäusewandabschnitt 17 beweglich gelagert. Entsprechend stützt sich das Steuerelement 13 innenseitig im Stempelfußgehäuse 5 über den schaftförmigen Abschnitt 23 und den kragenförmigen Abschnitt 22 ab.

Der Verbindungsabschnitt 12 weist ferner einen Abschnitt 25 mit einer trichterförmigen Querschnittserweiterung auf, wobei sich der Querschnitt des Abschnitts 25 in Erstreckungsrichtung kontinuierlich erweitert. Der Abschnitt 25 mit der Querschnittserweiterung mündet in die Druckkammer 10 und insbesondere in den ersten Druckkammerabschnitt 15. An seinem unteren, der Lochplatte 8 zugewandten Ende geht der Abschnitt 25 in den Wandabschnitt 19 über, der die Druckkammer 10 nach oben hin abschließt.

Der Wandabschnitt 19 weist eine zur Lochplatte 8 weisende Wandfläche 20 auf, an der ein umlaufender Vorsprung 21, hier in Form eines Dichtrings 21, vorgesehen ist. Der Dichtring 21 dient hier als Abstandshalter und gewährleistet, dass in der oberen Endposition I des Steuerelements 13 ein schmaler Raum bzw. Spalt zwischen der Oberseite des plattenförmigen Abschnitts 18 und der Wandfläche 20 des Wandabschnitts 19 verbleibt.

Bei dem in den Figuren 1 und 2 dargestellten Ausführungsbeispiel ist ferner beispielhaft vorgesehen, dass die Gesamtquerschnittsfläche aller Hauptdüsen 9, also die Summe der einzelnen Querschnittsflächen aller Hauptdüsen 9, größer ist als die Gesamtquerschnittsfläche bzw. Summe der einzelnen Querschnittsflächen aller Nebendüsen 14. Auch ist die Gesamtquerschnittsfläche aller Hauptdüsen 9 kleiner als die Gesamtquerschnittsfläche aller ersten Verbindungsöffnungen 13a einerseits und aller zweiten Verbindungsöffnungen 13b andererseits. Schließlich ist die Gesamtquerschnittsfläche aller ersten Verbindungsöffnungen 13a größer als die Gesamtquerschnittsfläche aller zweiten Verbindungsöffnungen 13b, deren Gesamtquerschnittsfläche wiederum kleiner als die der Öffnung 13c ist.

Im Falle eines an der ersten Gehäuseöffnung 6a des Stempelfußgehäuses 5 anliegenden Unterdrucks wird durch die Saugkraft, die auf das Steuerelement 13 wirkt, das Steuerelement 13 automatisch in die obere Endposition I gebracht. In diesem Zustand wird eine Luftströmung zunächst durch die Hauptdüsen 9 in den zweiten Druckkammerabschnitt 16 geführt, von dort durch die ersten Verbindungsöffnungen 13a in den ersten Druckkammerabschnitt 15, der von einem flachen Raumabschnitt gebildet wird, dessen Höhe von der Höhe des Vorsprungs 21 bestimmt wird, dann von hier in den Abschnitt 25 mit der Querschnittserweiterung, dann weiter durch die zweiten Verbindungsöffnungen 13b in den schaftförmigen hohlen Abschnitt 23 und von dort in den Druckkanal 7 und über die erste Gehäuseöffnung 6a wieder aus dem Stempelfuß 1 herausgeführt, insbesondere in einen hohlen Stempelschaft 32.

In dem umgekehrten Fall, dass an der ersten Gehäuseöffnung 6a ein Überdruck anliegt, wird das Steuerelement 13 durch die darauf wirkende Druckkraft in die zweite Endposition II bewegt. Eine Durchströmung erfolgt dann von der ersten Gehäuseöffnung 6a über den Druckkanal 7 und einen oberen Abschnitt des Verbindungsabschnitts 17 in den schaftförmigen hohlen Abschnitt 23, dann von dort durch die zweiten Verbindungsöffnungen 13b in den nun gegenüber der vorherigen Position erheblich vergrößerten ersten Druckkammerabschnitt 15. Hier teilt sich die Strömung auf in eine erste Teilströmung, die vom ersten Druckkammerabschnitt 15 durch die Nebendüsen 14 in eine erste Richtung in die Umgebung des Stempelfußes 1 austritt. Die übrige Teilströmung (zweite Teilströmung) wird aus dem ersten Druckkammerabschnitt 15 über die ersten Verbindungsöffnungen 13a in den zweiten, nunmehr verkleinerten Druckkammerabschnitt 16 geführt und tritt von dort durch die Hauptdüsen 9 in anderer Richtung in die Umgebung des Stempelfußes 1 aus.

Fig. 3 zeigt schließlich eine Vorrichtung 3 zum Etikettieren von einzelnen Packungen 4 mit einer Vorschubeinrichtung 28 zum Transport einer jeweiligen Packung 4 entlang eines Transportweges X, mit einer Etikettenspendeeinrichtung 29 zum Bereitstellen eines bedruckten Etiketts 30 und mit einer Etikettenaufbringeinrichtung 31 mit einem Etikettenstempel 2, der einen Stempelschaft 32 und einen damit verbundenen Stempelfuß 1 aufweist, wobei der Etikettenstempel 2 zwischen einer Spendepositon A, in der ein gespendetes Etikett 30 von dem Stempelfuß 1 ansaugbar ist und einer Aufbringposition B, in der das angesaugte Etikett 30 auf die jeweilige Packung 4 abblasbar ist, bewegbar ist.

Das jeweilige Etikett 30 wird hier in der Spendeposition A von dem zuvor beschriebenen Stempelfuß 1 ausschließlich durch die Hauptdüsen 9 angesaugt (in dieser Position befindet sich das Steuerelement 13 in der ersten Endposition I).

Anschließend wird der Etikettenstempel 2 in Richtung der vorbeigeführten Packung 4 abgesenkt und kurz vor der Oberseite der Packung 4 gestoppt. Hier wird dann ein Überdruck über den Stempelschaft 32 in den Stempelfuß 1 geleitet, wodurch das Steuerelement 13 in die zweite Endposition II bewegt wird. Dies hat zur Folge, dass ein Druckluftstoß sowohl aus den Hauptdüsen 9 als auch gleichzeitig aus den Nebendüsen 14 aus dem Stempelfuß 1 austritt, der das Etikett 30 auf die Packung 4 überträgt.

## Patentansprüche

1. Stempelfuß (1) für einen Etikettenstempel (2) einer Vorrichtung (3) zum Etikettieren von einzelnen Packungen (4)
- mit einem Stempelfußgehäuse (5), das sich von einem ersten Gehäuseende (5a) mit einer ersten Gehäuseöffnung (6a) zu einem zweiten Gehäuseende (5b) mit einer zweiten Gehäuseöffnung (6b) in einer Erstreckungsrichtung (E) erstreckt,
- mit einem sich im Stempelfußgehäuse (5) von der ersten Gehäuseöffnung (6a) in die Erstreckungsrichtung (E) erstreckenden Druckkanal (7),
- mit einer die zweite Gehäuseöffnung (6b) verschließenden, mit dem Stempelfußgehäuse (5) verbundenen Lochplatte (8), durch die sich mindestens eine Hauptdüse (9) in einer Verlaufsrichtung (V) erstreckt,
- mit einer sich im Stempelfußgehäuse (5) von der Lochplatte (8) entgegen der Erstreckungsrichtung (E) erstreckenden Druckkammer (10), die orthogonal zur Erstreckungsrichtung (E) zu allen Seiten von einem Stempelfußgehäusewandabschnitt (11) begrenzt ist,
- mit einem sich im Stempelfußgehäuse (5) in der Erstreckungsrichtung (E) zwischen dem Druckkanal (7) und der Druckkammer (10) erstreckenden Verbindungsabschnitt (12), der den Druckkanal (7) mit der Druckkammer (10) verbindet, und
- mit einem in der Druckkammer (10) angeordneten Steuerelement (13), das zwischen zwei unterschiedliche Durchströmungen der Druckkammer (10) bewirkenden Endpositionen (I,II) bewegbar ist,
- wobei die mindestens eine Hauptdüse (9) die Druckkammer (10) mit der Umgebung des Stempelfußgehäuses (5) verbindet,
**dadurch gekennzeichnet, dass** sich durch den die Druckkammer (10) orthogonal zur Erstreckungsrichtung (E) zu allen Seiten begrenzenden Stempelfußgehäusewandabschnitt (11) mindestens eine Nebendüse (14) erstreckt, die die Druckkammer (10) mit der Umgebung des Stempelfußgehäuses (5) verbindet, so dass beim Abblasen ein Etikett, welches größer ist als der Querschnitt des Stempelfußes (1) an seinem unteren Ende, von aus der mindestens einen Nebendüse (14) des Stempelfußes (1) austretender Druckluft erfasst wird.

2. Stempelfuß (1) nach Anspruch 1, **dadurch gekennzeichnet, dass** mehrere Hauptdüsen (9) und/oder Nebendüsen (14) vorgesehen sind.

3. Stempelfuß (1) nach Anspruch 1 oder 2, **dadurch gekennzeichnet, dass** eine oder mehrere der Hauptdüsen (9) und/oder Nebendüsen (14) jeweils als röhrenförmiger Kanal, vorzugsweise Bohrung oder zur Außenseite des Stempelfußgehäuses (5) vorstehende Röhre, und/oder schlitzförmig ausgebildet sind.

4. Stempelfuß (1) nach einem der vorangehenden Ansprüche, **dadurch gekennzeichnet, dass** die mindestens eine Hauptdüse (9) in der Erstreckungsrichtung (E) von der mindestens einen Nebendüse (14) beabstandet ist.

5. Stempelfuß (1) nach einem der vorangehenden Ansprüche, **dadurch gekennzeichnet, dass** die mindestens eine Nebendüse (14) zumindest abschnittsweise, vorzugsweise vollständig, winkelig zur Erstreckungsrichtung (E) und insbesondere winkelig zur Verlaufsrichtung (V) der mindestens einen Hauptdüse (9) verläuft, vorzugsweise, dass die außenseitige Öffnung (14a) einer jeden Nebendüse (14) näher am zweiten Gehäuseende (5b) des Stempelfußgehäuses (5) liegt als die innenseitige Öffnung (14b) der jeweiligen Nebendüse (14).

6. Stempelfuß (1) nach einem der vorangehenden Ansprüche, **dadurch gekennzeichnet, dass** das Steuerelement (13) die Druckkammer (10) in der Erstreckungsrichtung (E) in einen ersten Druckkammerabschnitt (15) und einen zweiten Druckkammerabschnitt (16) unterteilt, wobei der erste Druckkammerabschnitt (15) zwischen dem Steuerelement (13) und dem Verbindungsabschnitt (12) und der zweite Druckkammerabschnitt (16) zwischen dem Steuerelement (13) und der Lochplatte (8) liegt, vorzugsweise, dass der erste Druckkammerabschnitt (15) mit dem zweiten Druckkammerabschnitt (16) über mindestens eine erste Verbindungsöffnung (13a) im Steuerelement (13) oder über mindestens eine erste Verbindungsöffnung zwischen dem Steuerelement (13) und dem die Druckkammer (10) orthogonal zur Erstreckungsrichtung (E) zu allen Seiten begrenzenden Stempelfußgehäusewandabschnitt (11) verbunden ist, und/oder, dass der erste Druckkammerabschnitt (15) mit dem Verbindungsabschnitt (12) über mindestens eine zweite Verbindungsöffnung (13b) im Steuerelement (13) oder über mindestens eine zweite Verbindungsöffnung zwischen dem Steuerelement (13) und einer den Verbindungsabschnitt (12) orthogonal zur Erstreckungsrichtung (E) zu allen Seiten begrenzenden weiteren Stempelfußgehäusewandabschnitt (17) verbunden ist, und/oder, dass der erste Druckkammerabschnitt (15) mit der Umgebung des Stempelfußgehäuses (5) über die mindestens eine Nebendüse (14) verbunden ist.

7. Stempelfuß (1) nach einem der vorangehenden Ansprüche, **dadurch gekennzeichnet, dass** das Steuerelement (13) und die Druckkammer (10) derart ausgebildet sind, dass das Steuerelement (13) in seiner ersten Endposition (I) die mindestens eine Nebendüse (14) vollständig verschließt und/oder in seiner zweiten Endposition (II) die mindestens eine Nebendüse (14) vollständig freigibt.

8. Stempelfuß (1) nach einem der vorangehenden Ansprüche, **dadurch gekennzeichnet, dass** das Steuerelement (13) einen plattenförmigen Abschnitt (18) aufweist, der sich in der Druckkammer (10), insbesondere zwischen dem ersten Druckkammerabschnitt (15) und dem zweiten Druckkammerabschnitt (16), orthogonal zur Erstreckungsrichtung (E) erstreckt, vorzugsweise, dass die mindestens eine Verbindungsöffnung (13a) in dem plattenförmigen Abschnitt (18) oder zwischen dem plattenförmigen Abschnitt (18) und dem die Druckkammer (10) orthogonal zur Erstreckungsrichtung (E) zu allen Seiten begrenzenden Stempelfußgehäusewandabschnitt (11) angeordnet ist, weiter vorzugsweise, dass die Druckkammer (10) einen zur Erstreckungsrichtung (E) orthogonalen Wandabschnitt (19) mit einer zur Lochplatte (8) weisenden Wandfläche (20), insbesondere mit einem zur Druckkammer (10) weisenden umlaufenden Vorsprung (21), der vorzugsweise von einem Dichtring (21) gebildet wird, aufweist, wobei an dem Vorsprung (21) in der ersten Endposition (I) das Steuerelement (13) anliegt, wobei die mindestens eine erste Verbindungsöffnung (13a) vollständig freigegeben ist.

9. Stempelfuß (1) nach Anspruch 8, **dadurch gekennzeichnet, dass** das Steuerelement (13) einen kragenförmigen Abschnitt (22) aufweist, der mit dem plattenförmigen Abschnitt (18) verbunden ist und sich insbesondere von dem plattenförmigen Abschnitt (18) in die Erstreckungsrichtung (E) zur Lochplatte (8) erstreckt.

10. Stempelfuß (1) nach Anspruch 8 oder 9, **dadurch gekennzeichnet, dass** der plattenförmige Abschnitt (18) und/oder der kragenförmige Abschnitt (22) innenseitig an dem die Druckkammer (10) orthogonal zur Erstreckungsrichtung (E) zu allen Seiten begrenzenden Stempelfußgehäusewandabschnitt (11) anliegt und insbesondere in der ersten Endposition (I) die mindestens eine Nebendüse (14) verschließt.

11. Stempelfuß (1) nach einem der Ansprüche 8 bis 10, **dadurch gekennzeichnet, dass** das Steuerelement (13) einen schaftförmigen hohlen Abschnitt (23) aufweist, der mit dem plattenförmigen Abschnitt (18) verbunden ist und sich insbesondere von dem plattenförmigen Abschnitt (18) entgegen der Erstreckungsrichtung (E) zum Druckkanal (7) hin erstreckt, vorzugsweise, dass der schaftförmige Abschnitt (23) eine zum plattenförmigen Abschnitt (18) orthogonale Schaftwand (24) aufweist, die an ihrem druckkanalseitigen Ende eine zum Druckkanal (7) koaxiale Öffnung (13c) umgrenzt, wobei die mindestens eine Verbindungsöffnung (13b) in der Schaftwand (24) angeordnet ist, und/oder, dass der schaftförmige Abschnitt (23) im Verbindungsabschnitt (12) innenseitig anliegt und darin beweglich geführt ist, wobei insbesondere in der ersten Endposition (I) und/oder zweiten Endposition (II) des Steuerelements (13) die mindestens eine zweite Verbindungsöffnung (13b) vollständig freigegeben ist.

12. Stempelfuß (1) nach einem der Ansprüche 6 bis 11, **dadurch gekennzeichnet, dass** die Gesamtquerschnittsfläche aller Hauptdüsen (9)
- zumindest so groß ist wie oder größer ist als die Gesamtquerschnittsfläche aller Nebendüsen (14) und/oder
- höchstens so groß ist wie oder kleiner ist als die Gesamtquerschnittsfläche aller ersten Verbindungsöffnungen (13a) und/oder zweiten Verbindungsöffnungen (13b),
und/oder, dass die Gesamtquerschnittsfläche aller zweiten Verbindungsöffnungen (13b)
- höchstens so groß ist wie oder kleiner ist als die Gesamtquerschnittsfläche aller ersten Verbindungsöffnungen (13a) und/oder
- höchstens so groß ist wie oder kleiner ist als die Querschnittsfläche der koaxialen Öffnung (13c) des schaftförmigen Abschnitts (23).

13. Stempelfuß (1) nach einem der vorangehenden Ansprüche, **dadurch gekennzeichnet, dass** der Verbindungsabschnitt (12) einen Abschnitt (25) mit einer Querschnittserweiterung an seinem der Lochplatte (8) zugewandten Ende aufweist, wobei in der ersten Endposition (I) des Steuerelements (13) die mindestens eine zweite Verbindungsöffnung (13b) in den Abschnitt (25) mit der Querschnittserweiterung mündet.

14. Stempelfuß (1) nach einem der vorangehenden Ansprüche, **dadurch gekennzeichnet, dass** das Stempelfußgehäuse (5) zweiteilig aufgebaut ist, wobei ein erstes Gehäuseteil (26) den Druckkanal (7) und ein zweites Gehäuseteil (27) den Verbindungsabschnitt (12), die Druckkammer (10) und die Lochplatte (8) aufweist, wobei insbesondere das erste Gehäuseteil (26) mit dem zweiten Gehäuseteil (27) luftdicht verbunden, vorzugsweise zusammengesteckt, ist.

15. Vorrichtung (3) zum Etikettieren von einzelnen Packungen (4)
- mit einer Vorschubeinrichtung (28) zum Transport einer jeweiligen Packung (4) entlang eines Transportweges (X),
- mit einer Etikettenspendeeinrichtung (29) zum Bereitstellen eines Etiketts (30) und
- mit einer Etikettenaufbringeinrichtung (31) mit einem Etikettenstempel (2), der einen Stempelschaft (32) und einen damit verbundenen Stempelfuß (1) aufweist,
- wobei der Etikettenstempel (2) zwischen einer Spendepositon (A), in der ein gespendetes Etikett (30) von dem Stempelfuß (1) ansaugbar ist, und einer Aufbringposition (B), in der das angesaugte Etikett (30) auf die jeweilige Packung (4) abblasbar ist, bewegbar ist,
**dadurch gekennzeichnet, dass** der Stempelfuß (1) nach einem der vorangehenden Ansprüche ausgebildet ist.

16. Verfahren zum Etikettieren von einzelnen Packungen (4) unter Verwendung eines Stempelfußes (1) nach einem der Ansprüche 1 bis 14 und/oder unter Verwendung einer Vorrichtung (3) nach Anspruch 15, **dadurch gekennzeichnet,**
- **dass** ein Etikett (30) von dem Stempelfuß (1) an dessen zweitem Gehäuseende (5b) angesaugt wird, indem der Stempelfuß (1) an seinem ersten Gehäuseende (5a) mit einem Unterdruck beaufschlagt wird, wobei durch den Unterdruck eine Saugströmung im Stempelfuß (1) entgegen der Erstreckungsrichtung (E) erzeugt wird, die das Steuerelement (13) in seine erste Endposition (I) bewegt,
- **dass** das Etikett (30) dann im angesaugten Zustand unter Beibehaltung des Unterdrucks vom Stempelfuß (1) transportiert wird und
- **dass** das Etikett (30) dann von dem Stempelfuß (1) an seinem zweiten Gehäuseende (5b) abgeblasen wird, indem der Stempelfuß (1) an seinem ersten Gehäuseende (5a) mit einem Überdruck beaufschlagt wird, wobei durch den Überdruck eine Druckströmung im Stempelfuß (1) in die Erstreckungsrichtung (E) erzeugt wird, die das Steuerelement (13) in seine zweite Endposition (II) bewegt.

17. Verfahren nach Anspruch 16, **dadurch gekennzeichnet, dass** in der ersten Endposition (I) die Saugströmung ausschließlich durch die mindestens eine Hauptdüse (9) in das Stempelfußgehäuse (5) eintritt, und/oder, dass in der zweiten Endposition (II) die Druckströmung sowohl durch die mindestens eine Hauptdüse (9) als auch durch die mindestens eine Nebendüse (14) aus dem Stempelfußgehäuse (5) austritt.

## Claims

1. Punch foot (1) for a label punch (2) of a device (3) for labeling individual packs (4),
- having a punch foot housing (5) which in an extent direction (E) extends from a first housing end (5a) having a first housing opening (6a) to a second housing end (5b) having a second housing opening (6b);
- having a pressure duct (7) which in the punch foot housing (5) extends from the first housing opening (6a) in the extent direction (E);
- having a perforated plate (8) which closes the second housing opening (6b) and is connected to the punch foot housing (5), by way of which at least one primary nozzle (9) extends in an orientation direction (V) ;
- having a pressure chamber (10) which in the punch foot housing (5) extends from the perforated plate (8) counter to the extent direction (E) and which in a manner orthogonal to the extent direction (E) is on all sides delimited by a punch foot housing wall portion (11);
- having a connection portion (12) which in the punch foot housing (5) in the extent direction (E) extends between the pressure duct (7) and the pressure chamber (10) and which connects the pressure duct (7) to the pressure chamber (10); and
- having a control element (13) which is disposed in the pressure chamber (10) and which is movable between two terminal positions (I, II) that effect dissimilar flows through the pressure chamber (10) ;
- whereby the at least one primary nozzle (9) connects the pressure chamber (10) to the environment of the punch foot housing (5),
**characterized in that** at least one secondary nozzle (14) which connects the pressure chamber (10) to the environment of the punch foot housing (5) extends through the punch foot housing wall portion (11) that delimits the pressure chamber (10) on all sides in a manner orthogonal to the extent direction (E), such that a label which is larger than the cross-section of the punch foot (1) at the lower end thereof, when being blown down is impacted by compressed air exiting the at least one secondary nozzle (14) of the punch foot (1).

2. Punch foot (1) according to Claim 1, **characterized in that** a plurality of primary nozzles (9) and/or secondary nozzles (14) are provided.

3. Punch foot (1) according to either of Claims 1 and 2, **characterized in that** one or a plurality of the primary nozzles (9) and/or secondary nozzles (14) is/are in each case configured as a tubular duct, preferably a bore, or as a tube that projects toward the external side of the punch foot housing (5), and/or is/are configured so as to be slot-shaped.

4. Punch foot (1) according to one of the preceding claims, **characterized in that** the at least one primary nozzle (9) in the extent direction (E) is spaced apart from the at least one secondary nozzle (14).

5. Punch foot (1) according to one of the preceding claims, **characterized in that** the at least one secondary nozzle (14) at least in portions, preferably entirely, runs so as to be angled to the extent direction (E) and in particular angled to the orientation direction (V) of the at least one primary nozzle (9), preferably **in that** the opening (14a) on the external side of each secondary nozzle (14) is closer to the second housing end (5b) of the punch foot housing (5) than the opening (14b) on the internal side of the respective secondary nozzle (14).

6. Punch foot (1) according to one of the preceding claims, **characterized in that** the control element (13) in the extent direction (E) subdivides the pressure chamber (10) into a first pressure chamber portion (15) and a second pressure chamber portion (16), whereby the first pressure chamber portion (15) lies between the control element (13) and the connection portion (12), and the second pressure chamber portion (16) lies between the control element (13) and the perforated plate (8), preferably **in that** the first pressure chamber portion (15) is connected to the second pressure chamber portion (16) by way of at least one first connection opening (13a) in the control element (13), or by way of at least one first connection opening between the control element (13) and the punch foot housing wall portion (11) that delimits the pressure chamber (10) on all sides in a manner orthogonal to the extent direction (E), and/or **in that** the first pressure chamber portion (15) is connected to the connection portion (12) by way of at least one second connection opening (13b) in the control element (13), or by way of at least one second connection opening between the control element (13) and a further punch foot housing wall portion (17) that delimits the connection portion (12) on all sides in a manner orthogonal to the extent direction (E), and/or **in that** the first pressure chamber portion (15) is connected to the environment of the punch foot housing (5) by way of the at least one secondary nozzle (14).

7. Punch foot (1) according to one of the preceding claims, **characterized in that** the control element (13) and the pressure chamber (10) are configured in such a manner that the control element (13) in the first terminal position (I) thereof completely encloses the at least one secondary nozzle (14) and/or in the second terminal position (II) thereof completely releases the at least one secondary nozzle (14).

8. Punch foot (1) according to one of the preceding claims, **characterized in that** the control element (13) has a plate-shaped portion (18) which in the pressure chamber (10) in a manner orthogonal to the extent direction (E) extends in particular between the first pressure chamber portion (15) and the second pressure chamber portion (16), preferably **in that** the at least one connection opening (13a) is disposed in the plate-shaped portion (18), or between the plate-shaped portion (18) and the punch foot housing wall portion (11) that delimits the pressure chamber (10) on all sides in a manner orthogonal to the extent direction (E), more preferably **in that** the pressure chamber (10) has a wall portion (19), orthogonal to the extent direction (E), having a wall face (20) that points toward the perforated plate (8), in particular having an encircling protrusion (21) which points toward the pressure chamber (10) and is preferably formed by an annular seal (21), whereby the control element (13) in the first terminal position (I) bears on the protrusion (21), whereby the at least one first connection opening (13a) is completely released.

9. Punch foot (1) according to Claim 8, **characterized in that** the control element (13) has a collar-shaped portion (22) which is connected to the plate-shaped portion (18) and in particular from the plate-shaped portion (18) extends in the extent direction (E) toward the perforated plate (8).

10. Punch foot (1) according to Claim 8 or 9, **characterized in that** the plate-shaped portion (18) and/or the collar-shaped portion (22) on the internal side bear/bears on the punch foot housing wall portion (11) that delimits the pressure chamber (10) on all sides in a manner orthogonal to the extent direction (E), and in particular in the first terminal position (I) close/closes the at least one secondary nozzle (14) .

11. Punch foot (1) according to one of Claims 8 to 10, **characterized in that** the control element (13) has a shaft-shaped hollow portion (23) which is connected to the plate-shaped portion (18) and in particular from the plate-shaped portion (18) extends counter to the extent direction (E) toward the pressure duct (7), preferably **in that** the shaft-shaped portion (23) has a shaft wall (24) which is orthogonal to the plate-shaped portion (18) and which at the end thereof at the pressure duct side delimits an opening (13c) that is coaxial with the pressure duct (7), whereby the at least one connection opening (13b) is disposed in the shaft wall (24), and/or **in that** the shaft-shaped portion (23) bears on the internal side of the connection portion (12) and therein is movably guided, whereby the at least one second connection opening (13b) is completely released in particular in the first terminal position (I) and/or the second terminal position (II) of the control element (13).

12. Punch foot (1) according to one of Claims 6 to 11, **characterized in that** the total cross-sectional area of all primary nozzles (9)
- is at least equal to or greater than the total cross-sectional area of all secondary nozzles (14), and/or
- is at most equal to or smaller than the total cross-sectional area of all first connection openings (13a) and/or second connection openings (13b),
and/or **in that** the total cross-sectional area of all second connection openings (13b)
- is at most equal to or smaller than the total cross-sectional area of all first connection openings (13a), and/or
- is at most equal to or smaller than the cross-sectional area of the coaxial opening (13c) of the shaft-shaped portion (23).

13. Punch foot (1) according to one of the preceding claims, **characterized in that** the connection portion (12) at the end thereof that faces the perforated plate (8) has a portion (25) having a cross-sectional widening, whereby the at least one second connection opening (13b) in the first terminal position (I) of the control element (13) opens into the portion (25) having the cross-sectional widening.

14. Punch foot (1) according to one of the preceding claims, **characterized in that** the punch foot housing (5) is constructed in two parts, whereby a first housing part (26) comprises the pressure duct (7), and a second housing part (27) comprises the connection portion (12), the pressure chamber (10), and the perforated plate (8), whereby in particular the first housing part (26) is connected, preferably plug-fitted, to the second housing part (27) in an airtight manner.

15. Device (3) for labeling individual packs (4),
- having an advancing installation (28) for transporting a respective pack (4) along a transportation path (X);
- having a label dispensing installation (29) for providing a label (30); and
- having a label application installation (31) having a label punch (2) which has a punch shaft (32) and a punch foot (1) connected thereto;
- whereby the label punch (2) is movable between a dispensing position (A) in which a dispensed label (30) is able to be suctioned by the punch foot (1), and an application position (B) in which the suctioned label (30) is able to be blown down onto the respective pack (4),
**characterized in that** the punch foot (1) is configured according to one of the preceding claims.

16. Method for labeling individual packs (4) while using a punch foot (1) according to one of Claims 1 to 14, and/or while using a device (3) according to Claim 15, **characterized in that**
- a label (30) is suctioned by the punch foot (1) at the second housing end (5b) thereof, **in that** the punch foot (1) at the first housing end (5a) thereof is impinged with negative pressure, whereby on account of the negative pressure a suction flow counter to the extent direction (E) is generated in the punch foot (1), said suction flow moving the control element (13) to the first terminal position (I) thereof;
- the label (30) in the suctioned state, while maintaining the negative pressure, is then transported by the punch foot (1); and
- the label (30) is then blown down by the punch foot (1) at the second housing end (5b) thereof, **in that** the punch foot (1) at the first housing end (5a) thereof is impinged with positive pressure, whereby on account of the positive pressure a pressure flow in the extent direction (E) is generated in the punch foot (1), said pressure flow moving the control element (13) to the second terminal position (II) thereof.

17. Method according to Claim 16, **characterized in that** the suction flow in the first terminal position (I) enters the punch foot housing (5) exclusively by way of the at least one primary nozzle (9), and/or **in that** the pressure flow in the second terminal position (II) exits the punch foot housing (5) by way of the at least one primary nozzle (9) as well as by way of the at least one secondary nozzle (14).

## Revendications

1. Pied de poinçon (1) pour un poinçon applicateur d'étiquettes (2) d'un dispositif (3) d'étiquetage de paquets individuels (4), comprenant :
- un boîtier de pied de poinçon (5) qui s'étend depuis une première extrémité de boîtier (5a) avec une première ouverture de boîtier (6a) jusqu'à une deuxième extrémité de boîtier (5b) avec une deuxième ouverture de boîtier (6b) dans une direction d'étendue (E),
- un canal de pression (7) s'étendant dans le boîtier de pied de poinçon (5) depuis la première ouverture de boîtier (6a) dans la direction d'étendue (E),
- une plaque perforée (8) fermant la deuxième ouverture de boîtier (6b), connectée au boîtier de pied de poinçon (5), à travers laquelle au moins une buse principale (9) s'étend dans la direction d'extension (V),
- une chambre de pression (10) s'étendant dans le boîtier de pied de poinçon (5) depuis la plaque perforée (8) dans le sens opposé à la direction d'étendue (E), qui est limitée perpendiculairement à la direction d'étendue (E) de tous les côtés par une portion de paroi de boîtier de pied de poinçon (11),
- une portion de liaison (12) s'étendant dans le boîtier de pied de poinçon (5) dans la direction d'étendue (E) entre le canal de pression (7) et la chambre de pression (10), qui relie le canal de pression (7) à la chambre de pression (10), et
- un élément de commande (13) disposé dans la chambre de pression (10), qui peut être déplacé entre deux positions d'extrémité (I, II) provoquant des écoulements différents à travers la chambre de pression (10),
- dans lequel l'au moins une buse principale (9) relie la chambre de pression (10) à l'environnement du boîtier de pied de poinçon (5),
**caractérisé en ce qu'**au moins une buse secondaire (14) s'étend à travers la portion de paroi de boîtier de pied de poinçon (11) limitant la chambre de pression (10) de tous les côtés perpendiculairement à la direction d'étendue (E), laquelle relie la chambre de pression (10) à l'environnement du boîtier de pied de poinçon (5), de sorte que lors du soufflage, une étiquette qui est plus grande que la section transversale du pied de poinçon (1), soit prise au niveau de son extrémité inférieure par de l'air sous pression sortant de l'au moins une buse secondaire (14) du pied de poinçon (1).

2. Pied de poinçon (1) selon la revendication 1, **caractérisé en ce que** plusieurs buses principales (9) et/ou buses secondaires (14) sont prévues.

3. Pied de poinçon (1) selon la revendication 1 ou 2, **caractérisé en ce qu'**une ou plusieurs des buses principales (9) et/ou des buses secondaires (14) sont réalisées à chaque fois sous forme de canal tubulaire, de préférence sous forme d'alésage ou de tuyau saillant vers le côté extérieur du boîtier de pied de poinçon (5), et/ou sous forme de fente.

4. Pied de poinçon (1) selon l'une quelconque des revendications précédentes, **caractérisé en ce que** l'au moins une buse principale (9) est espacée de l'au moins une buse secondaire (14) dans la direction d'étendue (E).

5. Pied de poinçon (1) selon l'une quelconque des revendications précédentes, **caractérisé en ce que** l'au moins une buse secondaire (14) s'étend au moins en partie, de préférence complètement, suivant un certain angle par rapport à la direction d'étendue (E) et notamment suivant un certain angle par rapport à la direction d'extension (V) de l'au moins une buse principale (9), de préférence **en ce que** l'ouverture du côté extérieur (14a) de chaque buse secondaire (14) est située plus près de la deuxième extrémité de boîtier (5b) du boîtier de pied de poinçon (5) que l'ouverture du côté intérieur (14b) de la buse secondaire respective (14).

6. Pied de poinçon (1) selon l'une quelconque des revendications précédentes, **caractérisé en ce que** l'élément de commande (13) divise la chambre de pression (10) dans la direction d'étendue (E) en une première portion de chambre de pression (15) et une deuxième portion de chambre de pression (16), la première portion de chambre de pression (15) étant située entre l'élément de commande (13) et la portion de liaison (12) et la deuxième portion de chambre de pression (16) étant située entre l'élément de commande (13) et la plaque perforée (8), de préférence **en ce que** la première portion de chambre de pression (15) est connectée à la deuxième portion de chambre de pression (16) par le biais d'au moins une première ouverture de liaison (13a) dans l'élément de commande (13) ou par le biais d'au moins une première ouverture de liaison entre l'élément de commande (13) et la portion de paroi de boîtier de pied de poinçon (11) limitant la chambre de pression (10) de tous les côtés perpendiculairement à la direction d'étendue (E), et/ou **en ce que** la première portion de chambre de pression (15) est connectée à la portion de liaison (12) par le biais d'au moins une deuxième ouverture de liaison (13b) dans l'élément de commande (13) ou par le biais d'au moins une deuxième ouverture de liaison entre l'élément de commande (13) et une portion de paroi de boîtier de pied de poinçon supplémentaire (17) limitant la portion de liaison (12) de tous les côtés perpendiculairement à la direction d'étendue (E), et/ou **en ce que** la première portion de chambre de pression (15) est connectée à l'environnement du boîtier de pied de poinçon (5) par le biais de l'au moins une buse secondaire (14) .

7. Pied de poinçon (1) selon l'une quelconque des revendications précédentes, **caractérisé en ce que** l'élément de commande (13) et la chambre de pression (10) sont réalisés de telle sorte que l'élément de commande (13), dans sa première position d'extrémité (I), ferme complètement l'au moins une buse secondaire (14) et/ou, dans sa deuxième position d'extrémité (II), ouvre complètement l'au moins une buse secondaire (14).

8. Pied de poinçon (1) selon l'une quelconque des revendications précédentes, **caractérisé en ce que** l'élément de commande (13) présente une portion en forme de plaque (18) qui s'étend dans la chambre de pression (10), en particulier entre la première portion de chambre de pression (15) et la deuxième portion de chambre de pression (16) perpendiculairement à la direction d'étendue (E), de préférence **en ce que** l'au moins une ouverture de liaison (13a) est disposée dans la portion en forme de plaque (18) ou entre la portion en forme de plaque (18) et la portion de paroi de boîtier de pied de poinçon (11) limitant la chambre de pression (10) de tous les côtés perpendiculairement à la direction d'étendue (E), en outre, de préférence, **en ce que** la chambre de pression (10) présente une portion de paroi (19) perpendiculaire à la direction d'étendue (E) avec une surface de paroi (20) tournée vers la plaque perforée (8), en particulier avec une saillie périphérique (21) tournée vers la chambre de pression (10), qui est formée de préférence par une bague d'étanchéité (21), l'élément de commande (13) s'appliquant dans la première position d'extrémité (I) contre la saillie (21), l'au moins une première ouverture de liaison (13a) étant entièrement ouverte.

9. Pied de poinçon (1) selon la revendication 8, **caractérisé en ce que** l'élément de commande (13) présente une portion en forme de collet (22) qui est connectée à la portion en forme de plaque (18) et qui s'étend notamment depuis la portion en forme de plaque (18) dans la direction d'étendue (E) vers la plaque perforée (8).

10. Pied de poinçon (1) selon la revendication 8 ou 9, **caractérisé en ce que** la portion en forme de plaque (18) et/ou la portion en forme de collet (22) s'applique(nt) du côté intérieur contre la portion de paroi de boîtier de pied de poinçon (11) limitant la chambre de pression (10) de tous les côtés perpendiculairement à la direction d'étendue (E) et en particulier, dans la première position d'extrémité (I), ferme(nt) l'au moins une buse secondaire (14).

11. Pied de poinçon (1) selon l'une quelconque des revendications 8 à 10, **caractérisé en ce que** l'élément de commande (13) présente une portion creuse en forme d'arbre (23) qui est connectée à la portion en forme de plaque (18) et qui s'étend en particulier depuis la portion en forme de plaque (18) dans la direction opposée à la direction d'étendue (E) vers le canal de pression (7), de préférence **en ce que** la portion en forme d'arbre (23) présente une paroi d'arbre (24) perpendiculaire à la portion en forme de plaque (18) qui délimite, au niveau de son extrémité du côté du canal de pression, une ouverture (13c) coaxiale au canal de pression (7), l'au moins une ouverture de liaison (13b) étant disposée dans la paroi d'arbre (24), et/ou **en ce que** la portion en forme d'arbre (23) s'applique du côté intérieur dans la portion de liaison (12) et est guidée de manière déplaçable dans celle-ci, en particulier, dans la première position d'extrémité (I) et/ou dans la deuxième position d'extrémité (II) de l'élément de commande (13), l'au moins une deuxième ouverture de liaison (13b) étant complètement ouverte.

12. Pied de poinçon (1) selon l'une quelconque des revendications 6 à 11, **caractérisé en ce que** la surface totale en section transversale de toutes les buses principales (9)
- est au moins égale ou supérieure à la surface totale en section transversale de toutes les buses secondaires (14) et/ou
- est au maximum égale ou inférieure à la surface totale en section transversale de toutes les premières ouvertures de liaison (13a) et/ou deuxièmes ouvertures de liaison (13b),
et/ou **en ce que** la surface totale en section transversale de toutes les deuxièmes ouvertures de liaison (13b)
- est au maximum égale ou inférieure à la surface totale en section transversale de toutes les premières ouvertures de liaison (13a) et/ou
- est au maximum égale ou inférieure à la surface en section transversale de l'ouverture coaxiale (13c) de la portion en forme d'arbre (23).

13. Pied de poinçon (1) selon l'une quelconque des revendications précédentes, **caractérisé en ce que** la portion de liaison (12) présente une portion (25) avec un élargissement de section transversale au niveau de son extrémité tournée vers la plaque perforée (8), l'au moins une deuxième ouverture de liaison (13b), dans la première position d'extrémité (I) de l'élément de commande (13), débouchant dans la portion (25) présentant l'élargissement de section transversale.

14. Pied de poinçon (1) selon l'une quelconque des revendications précédentes, **caractérisé en ce que** le boîtier de pied de poinçon (5) est réalisé en deux parties, une première partie de boîtier (26) présentant le canal de pression (7) et une deuxième partie de boîtier (27) présentant la portion de liaison (12), la chambre de pression (10) et la plaque perforée (8), la première partie de boîtier (26) étant notamment connectée de manière étanche à l'air à la deuxième partie de boîtier (27), de préférence par emboîtement mutuel.

15. Dispositif (3) pour l'étiquetage de paquets individuels (4), comprenant :
- un dispositif d'avance (28) pour transporter un paquet respectif (4) le long d'une voie de transport (X),
- un dispositif de distribution d'étiquettes (29) pour fournir une étiquette (30), et
- un dispositif d'application d'étiquettes (31) avec un poinçon applicateur d'étiquettes (2) qui présente une tige de poinçon (32) et un pied de poinçon (1) connecté à celle-ci,
dans lequel
- le poinçon applicateur d'étiquettes (2) peut être déplacé entre une position de distribution (A) dans laquelle une étiquette distribuée (30) peut être aspirée par le pied de poinçon (1), et une position d'application (B) dans laquelle l'étiquette aspirée (30) peut être soufflée sur le paquet respectif (4),
**caractérisé en ce que** le pied de poinçon (1) est réalisé selon l'une quelconque des revendications précédentes.

16. Procédé d'étiquetage de paquets individuels (4) en utilisant un pied de poinçon (1) selon l'une quelconque des revendications 1 à 14 et/ou en utilisant un dispositif (3) selon la revendication 15, **caractérisé en ce que**
- une étiquette (30) est aspirée par le pied de poinçon (1) au niveau de sa deuxième extrémité de boîtier (5b), par le fait que le pied de poinçon (1) est sollicité avec une dépression au niveau de sa première extrémité de boîtier (5a), un écoulement d'aspiration étant généré dans le pied de poinçon (1) dans le sens opposé à la direction d'étendue (E) sous l'effet de la dépression, lequel déplace l'élément de commande (13) dans sa première position d'extrémité (I),
- l'étiquette (30) est ensuite transportée dans l'état aspiré en conservant la dépression depuis le pied de poinçon (1) et
- l'étiquette (30) est ensuite soufflée depuis le pied de poinçon (1) au niveau de sa deuxième extrémité de boîtier (5b), par le fait que le pied de poinçon (1) est sollicité avec une surpression au niveau de sa première extrémité de boîtier (5a), un écoulement de pression étant généré dans le pied de poinçon (1) dans la direction d'étendue (E) sous l'effet de la surpression, lequel déplace l'élément de commande (13) dans sa deuxième position d'extrémité (II).

17. Procédé selon la revendication 16, **caractérisé en ce que** dans la première position d'extrémité (I), l'écoulement d'aspiration entre exclusivement à travers l'au moins une buse principale (9) dans le boîtier de pied de poinçon (5), et/ou **en ce que** dans la deuxième position d'extrémité (II), l'écoulement de pression sort à la fois à travers l'au moins une buse principale (9) ainsi qu'à travers l'au moins une buse secondaire (14) hors du boîtier de pied de poinçon (5).
